# EUROPÄISCHE PATENTANMELDUNG

(11) **EP 1 080 969 A2**
(43) Veröffentlichungstag der Anmeldung: **07.03.2001**
(21) Anmeldenummer: 00118962.0
(22) Anmeldetag: 01.09.2000
(51) Int. Cl.: B60J 10/12

(54) **Deckel eines Fahrzeugdaches mit Kunststoffrahmen und Randspaltdichtung sowie Verfahren zur Herstellung eines solchen Deckels**

(30) Priorität: 03.09.1999 DE 19942039; 07.04.2000 DE 10017169
(71) Anmelder: Webasto Vehicle Systems International GmbH, 82131 Stockdorf (DE)
(72) Erfinder: Pätz, Werner, 86928 Hofstetten (DE)
(74) Vertreter: Wiese, Gerhard

(57) **Zusammenfassung**

Die Erfindung betrifft einen Deckel (3, 23) eines Fahrzeugdaches (1) mit einer Deckelplatte (5), einem am Rand der Deckelplatte (5) umlaufenden, angespritzten bzw. angeschäumten Kunststoffrahmen (4, 14, 24) und einer Randspaltdichtung am Außenrand des Kunststoffrahmens. Erfindungsgemäß ist vorgesehen, daß der Kunststoffrahmen am Außenrand eine nach unten offene Nut (7) aufweist, die nach außen durch eine die Randspaltdichtung bildende Lippe (8, 28) begrenzt ist und in der vorzugsweise eine Kunststoffeinlage (13, 43, 53) aus einem Material angeordnet ist, das weicher ist als das Material des Kunststoffrahmens. Die Erfindung hat ferner ein Verfahren zur Herstellung eines solchen Deckels zum Gegenstand, bei dem der Kunststoffrahmen am Rand der Deckelplatte, gegebenenfalls unter Einschluß des Randbereichs eines Verstärkungsrahmens (6), angespritzt oder angeschäumt wird und bei dem vorzugsweise im Zuge des Anspritzens oder Anschäumens des Kunststoffrahmens oder in einem nachfolgenden Arbeitsschritt die Kunststoffeinlage in die Nut des Kunststoffrahmens eingebracht wird.

## Beschreibung

Die Erfindung betrifft einen Deckel eines Fahrzeugdaches mit einer Deckelplatte, einem am Rand der Deckelplatte umlaufenden, aufgespritzten bzw. aufgeschäumten Kunststoffrahmen und einer Randspaltdichtung am Außenrand des Kunststoffrahmens. Die Erfindung hat ferner ein Verfahren zur Herstellung eines solchen Deckels zum Gegenstand.

Ein Deckel der eingangs genannten Art für ein öffnungsfähiges Fahrzeugdach ist beispielsweise aus der DE 197 07 145 C1 bekannt. Dabei ist an der Unterseite der Deckelplatte ein Verstärkungsrahmen angeordnet, der durch den Kunststoffrahmen mit der Deckelplatte fest verbunden ist. Der bekannte Deckel besitzt eine umlaufende Randspaltdichtung, die nach Herstellung des Verbunds aus Deckelrahmen, Verstärkungsrahmen und Kunststoffrahmen durch einen Spritz- oder Schäumprozeß in eine Dichtungsaufnahmenut des Kunststoffrahmens eingesetzt wird. Diese Dichtungsaufnahmenut wird entweder gefräst oder durch einen Schieber im Schäumwerkzeug erzeugt, mit welchem der Kunststoffrahmen auf Deckelplatte und Verstärkungsrahmen geschäumt wird. Hierbei handelt es sich um einen aufwendigen und teuren Vorgang, der außerdem im Hinblick auf Genauigkeit und Prozeßsicherheit kritisch ist. Im einzelnen ist festzuhalten, daß das Fräsen einer Dichtungsaufnahmenut die Bereitstellung entsprechender Anlagen erfordert. Abgesehen davon, daß es sich beim Fräsen um einen zusätzlichen Arbeitsgang handelt, ist ein hoher Fräserverschleiß in Kauf zu nehmen, und es ist eine kritische Toleranzlage zu berücksichtigen. Außerdem sind optische Fehlstellen auf der Oberseite des Kunststoffrahmens, der typischerweise aus Polyurethanschaum besteht, bei Radieneinlauf infolge Fräsanlagenkonzept nicht vermeidbar. Das Umschäumen mittels Schiebern zur Ausbildung der Dichtungsaufnahmenut bedingt ein aufwendiges Schäumwerkzeug, eine relativ lange Taktzeit durch die Schieberfunktion, einen Reinigungsvorgang und ein Trennen der Schieber, wobei außerdem mit einer Verschlechterung des Schaumflusses aufgrund der Schieber zu rechnen ist. Schließlich ist im Hinblick auf die separate Randspaltdichtung anzuführen, daß es sich hierbei um ein relativ teures Einzelteil handelt, das Werkzeugkosten, hohe Disposition und Logistik sowie einen zusätzlichen Montagevorgang erfordert.

Aus DE 196 24 715 C 1 ist ein weiterer Deckel der eingangs genannten Art eines öffnungsfähigen Fahrzeugdachs bekannt, der keinen Verstärkungsrahmen umfaßt. Der Kunststoffrahmen dieses bekannten Deckels besitzt einen sich nach außen erstreckenden zunächst freien Randstreifen, der unter Bildung einer Hohlkammer umbiegbar ist und mit seinem Außenrand nahe der Deckelplattenumfangskante benachbart an den Kunststoffrahmen von unten her festlegbar ist. Zur Anpassung an Maßabweichungen und Unebenheiten im Randspalt zwischen Dachausnehmung und Deckel ist diese Hohlkammer einstellbar ausgebildet. Zu diesem Zweck ist am Außenrand des Randstreifens ein Innenflächenabschnitt vorgesehen, welcher nach der die Hohlkammer bildenden Umbiegung des Randstreifens an einer Gegenfläche des Kunststoffrahmens mittels einer Klemmprofilleiste einstellbar festgelegt werden kann. Zu diesem Zweck greift die Klemmprofilleiste in eine Klemmnut des Rahmenkörpers ein. Die durch diese Hohlkammer festgelegte Randspaltdichtungsanordnung ist aufgrund ihres Einstellungsbedarfs zumindest bei der Montage aufwendig. Fraglich ist, ob die Dichtungsfunktion dieser Randspaltdichtungsanordnung auf Grundlage der derart festgelegten Hohlkammer auf Dauer gewährleistet ist.

Angesichts dieses Standes der Technik besteht die Aufgabe der vorliegenden Erfindung darin, einen Deckel der eingangs genannten Art zu schaffen, der auch hinsichtlich der Randspaltdichtung kostengünstig herstellbar ist und eine dauerhaft zuverlässige Dichtungsfunktion gewährleistet. Es soll ferner ein Verfahren zur Herstellung eines solchen Deckels bereitgestellt werden.

Gelöst wird diese Aufgabe durch einen Deckel mit den Merkmalen des Anspruchs 1 sowie durch ein Verfahren mit den Merkmalen des Anspruchs 17. Vorteilhafte Weiterbildungen der Erfindung sind in den Unteransprüchen angegeben.

Demnach sieht die Erfindung eine Integration der Randspaltdichtung in den Außenrand des Kunststoffrahmens vor, und zwar in Gestalt einer Lippe, die am Kunststoffaußenrahmen umläuft und durch eine im Außenrand des Kunststoffrahmens gebildete Nut festgelegt ist, deren dünne Außenwand diese Dichtungslippe bildet. Die Herstellung des erfindungsgemäßen Deckels erfolgt in an sich bekannter Weise durch Anspritzen bzw. Anschäumen des Kunststoffrahmens an der Deckelplatte, wobei jedoch die nach unten offene Nut und die die Randspaltdichtung bildende Lippe ausgebildet werden.

Während grundsätzlich die erfindungsgemäß am Kunststoffrahmen vorgesehene Lippe an sich bereits eine Dichtfunktion gegenüber der betreffenden Anlagefläche des Fahrzeugdaches bereitstellt, ist gemäß einer besonders vorteilhaften Weiterbildung der Erfindung vorgesehen, daß in der Nut eine Kunststoffeinlage aus einem Material angeordnet ist, welches weicher als das Material des Kunststoffrahmens ist und damit die Lippe stets gegen die zugehörige Anlagefläche des Fahrzeugdaches drückt. Ein zusätzlicher Vorteil der Kunststoffeinlage besteht darin, daß in diese weitere Funktionen für das Fahrzeug integriert werden können, beispielsweise ein Einklemmschutz, eine Heizung für den Deckelrand, eine Antenne, beispielsweise eine Rundfunkantenne oder eine GPS-Antenne und dergleichen.

Zur Förderung der Dichtfunktion kann die Lippe mit erhabener Außenkontur gebildet sein.

Der Grund der Nut kann über eine ein Gelenk bildende Schwächungsstelle in die Lippe übergehen. Dadurch wird bei der Herstellung erreicht, daß ein Schwenkpunkt für die Zwangsentformung bei Ausbildung der Nut durch den Schäum- bzw. Spritzprozeß bereitgestellt wird. Beim späteren Einsatz im Fahrzeugdach wird durch diese Schwächungsstelle die Verschwenkbarkeit der Lippe auch in dem Fall gewährleistet, daß der den Deckel aufnehmende Dachausschnitt kleiner als ein vorgegebenes Nennmaß ist.

Als Material für die in der Nut angeordnete Kunststoffeinlage kommt vorteilhafterweise Schaumstoff, beispielsweise geschlossenporiger Schaumstoff, wie etwa Moosgummi, in Betracht.

Um den dauerhaften Sitz der Kunststoffeinlage in der Nut zu gewährleisten, ist diese vorteilhafterweise an die Kontur der Kunststoffeinlage angepaßt. Eine besonders vorteilhafte Ausführungsform sieht eine im Querschnitt in etwa kreisförmige Nut und eine entsprechend geformte Kunststoffeinlage vor. Dabei ist die äußere Lippe ebenfalls mindestens in einem Teilbereich konvex nach außen gewölbt.

Die Kunststoffeinlage kann die Nut mindestens näherungsweise vollständig ausfüllen. Sie kann aber auch einen den Querschnitt der Nut nur teilweise ausfüllenden Querschnitt haben, insbesondere im Querschnitt ringförmig oder umgekehrt U-förmig ausgebildet sein und insbesondere dann auch aus einem nicht geschäumten Kunststoff, beispielsweise Gummi, bestehen.

Der Deckel kann als beweglicher, insbesondere austellbarer und/oder verschiebbarer Deckel eines öffnungsfähigen Fahrzeugdaches oder aber als in das Fahrzeugdach unbeweglich eingesetztes, beispielsweise transparentes oder mit Solarzellen belegtes Dachelement ausgebildet sein.

Im Falle eines beweglichen Deckels ist gemäß einer weiteren vorteilhaften Ausbildung der Erfindung vorgesehen, daß die Lippe nach unten in einem verjüngten Abtropfende ausläuft, das problemlos beim Schäum- oder Spritzprozeß ausgebildet werden kann. Die Deckelplatte des beweglichen Deckels kann zweckmäßig auf einem Verstärkungsrahmen abgestützt sein. Letzterer kann mit der Deckelplatte verklebt oder auch einfach dadurch verbunden sein, daß der Kunststoffrahmen den Randbereich des Verstärkungsrahmens umschließt.

Im Falle eines unbeweglich eingesetzten Deckels kann dieser mit dem Fahrzeugdach verklebt oder verschraubt sein, und in weiterer Ausgestaltung der Erfindung kann der Kunststoffrahmen zugleich als Abstandshalter ausgebildet sein, der für eine vorbestimmte Ausrichtung der Oberseite des Deckels zu dem den Deckel umgreifenden Teil des Fahrzeugdaches sorgt.

Die Kunststoffeinlage kann im Zuge des Anspritzens oder Anschäumens des Kunststoffrahmens oder in einem nachfolgenden Arbeitsschritt in die Nut des Kunststoffrahmens eingebracht werden.

Entsprechend einer bevorzugten Vorgehensweise kann eine vorgefertigte Kunststoffeinlage an einer Halterung in einem zur Ausbildung des Kunststoffrahmens benutzten Spritz- oder Schäumwerkzeug fixiert werden, dann der Kunststoffrahmen ausgebildet werden und beim Öffnen des Spritz- oder Schäumwerkzeugs für den Kunststoffrahmen die Kunststoffeinlage von der Halterung gelöst werden.

Bei einem abgewandelten Verfahren wird nach dem Anspritzen oder Anschäumen des Kunststoffrahmens zur Bildung der Kunststoffeinlage bestimmter Schaumstoff in die Nut des Kunststoffrahmens eingebracht und dort aufgeschäumt.

Nachfolgend wird die Erfindung anhand der Zeichnung beispielhaft näher erläutert; es zeigen:
- Fig. 1: eine perspektivische Ansicht eines Fahrzeugdachs,
- Fign. 2 und 3: Querschnittansichten des Randbereichs eines beweglichen Deckels des in Fig. 1 gezeigten Fahrzeugdachs mit unterschiedlichen Ausführungsformen der in den Deckel integrierten Dichtlippe,
- Fig. 4: eine Querschnittansicht des Randbereichs eines mit einem Verstärkungsrahmen verklebten beweglichen Deckels,
- Fign. 5 und 6: Querschnittansichten des Randbereichs eines unbeweglichen Deckels des in Fig. 1 gezeigten Fahrzeugdachs mit unterschiedlicher Ausbildung der Verbindung zwischen Deckel und Fahrzeugdach, sowie
- Fign. 7 und 8: schematische Querschnittansichten des Deckelrandbereichs zur Erlauterung der Herstellung des Deckels gemäß zwei unterschiedlichen Verfahren.

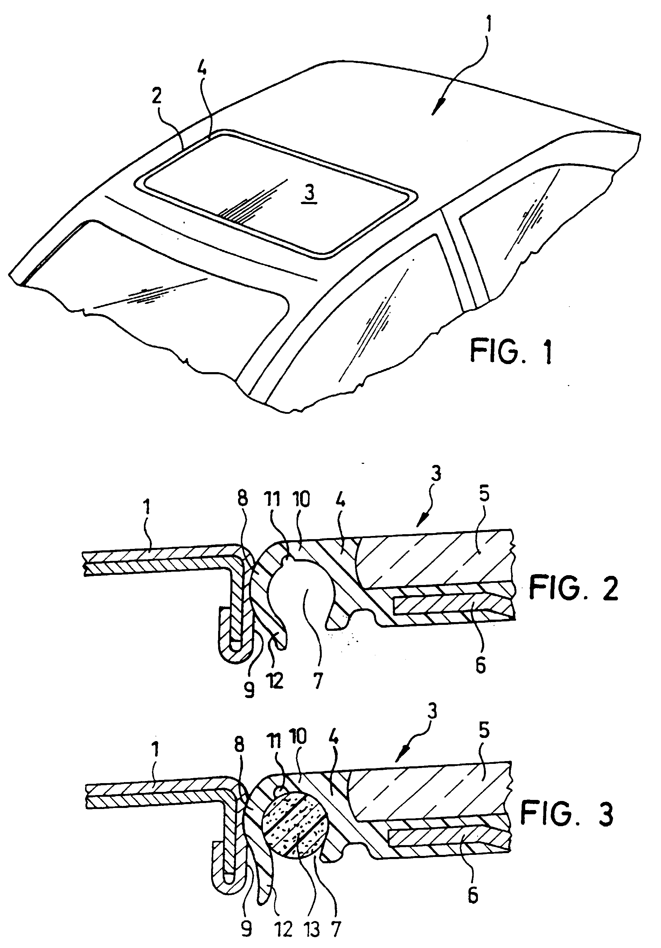

Ein festes Fahrzeugdach 1 weist eine Dachöffnung 2 auf, die im Falle der Ausführungsformen der Figuren 2, 3 und 4 mittels eines beweglichen Deckels 3 wahlweise verschlossen oder zumindest durch Ausstellen der Hinterkante des Deckels 3 teilweise freigegeben werden kann. Der Deckel 3 umfaßt einen umlaufenden Kunststoffrahmen 4, der erfindungsgemäß auch die Dichtfunktion des Deckels gegenüber dem festen Fahrzeugdach 1 gewährleistet, wie dies im folgenden anhand von Fig. 2 erläutert ist.

Der Deckel 3 umfaßt eine Deckelplatte 5 bevorzugt aus transparentem Material, wie beispielsweise Glas oder transparentem Kunststoff, und einen Verstärkungsrahmen 6 sowie den vorstehend angesprochenen Kunststoffrahmen 4. Der Verstärkungsrahmen 6 ist beispielsweise als Blechstanzteil ausgebildet. Der Kunststoffrahmen 4 ist um den Rand der Deckelplatte 5 beispielsweise mittels eines entsprechenden Werkzeugs geschäumt, und er umschließt auch den Randbereich des Verstärkungsrahmens 6, der auf diese Weise an die Deckelplatte 5 angebunden ist.

Im Außenrand des Kunststoffrahmens 4 ist eine nach unten offene Nut 7 mit einer allgemein zylinderförmigen Innenwandung gebildet. Die Nut 7 ist außen von einer dünnen Wandung in Gestalt einer Lippe 8 begrenzt, die eine erhabene, konvexe Außenkontur aufweist und dazu bestimmt ist, als Dichtelement in Eingriff mit einem Dachöffnungsrand 9 zu gelangen, und zwar unter elastischer Anlage gegen diesen. Diese Elastizität bezieht die Lippe 8 einem Material entsprechender Steifigkeit, aus ihrer dünnen Ausbildung sowie aus einem ebenfalls dünnen Übergangsbereich 10 zum massiven Teil des Verstärkungsrahmens 6. Bevorzugt ist in dem Übergangsteil 10 eine Schwächungsstelle 11, beispielsweise in Gestalt einer Rille gebildet. Diese Verschwenkbarkeit der Lippe 8 um eine Sollbiegestelle kommt insbesondere dann zum Tragen, wenn der Dachausschnitt kleiner als ein vorgegebenes Nennmaß ist, so daß die Lippe sich zum Ausgleich von Fertigungstoleranzen und zu Dichtzwecken mit einer leichten Vorspannung an den Dachöffnungsrand 9 anlegt.

Das untere Ende der Lippe 8 läuft in ein verjüngtes Abtropfende 12 aus, das etwa als langgestreckte Zunge (Fig. 3) oder als S-förmig geschwungene kürzere Zunge (Fig. 2) ausgebildet sein kann.

Bei der in Fig. 3 gezeigten Ausführungsform ist in der Nut 7 eine Kunststoffeinlage 13 angeordnet, die aus einem weicheren Material besteht als dasjenige des Kunststoffrahmens 4. Der Zweck dieser Kunststoffeinlage besteht darin, die federnde Anlage der Lippe 8 am Dachöffnungsrand 9 zu fördern bzw. zu unterstützen. Die Kunststoffeinlage 13 kann beispielsweise in Gestalt eines geschlossenporigen Schaumstoffs, wie etwa einer Moosgummischnur, gebildet sein, und diese Kunststoffeinlage 13 eignet sich auch zur Aufnahme weiterer Funktionselemente, wie etwa einer Antenne, eines Einklemmschutzes oder einer Heizung in Form eines elektrischen Heizdrahts für den Deckelrand. Als Kunststoffeinlage eignet sich aber unter anderem auch ein Kunststoffschlauch, insbesondere ein Gummischlauch.

Die Ausbildung der Ringspaltdichtung am Deckel in Gestalt einer einen integralen Teil des Verstärkungsrahmens bildenden Lippe hat den Vorteil, daß die Außenmaße des Deckels genauer festlegbar sind. Selbst bei Nutzung einer Kunststoffeinlage in der die Lippe festlegenden Nut läßt sich eine derartige Randspaltdichtung kostengünstiger herstellen als herkömmliche Randspaltdichtungen, die eingangs erläutert sind und eine Aufnahmenut für ein getrenntes Dichtelement benötigen. Außerdem gestaltet sich die Montage einfacher.

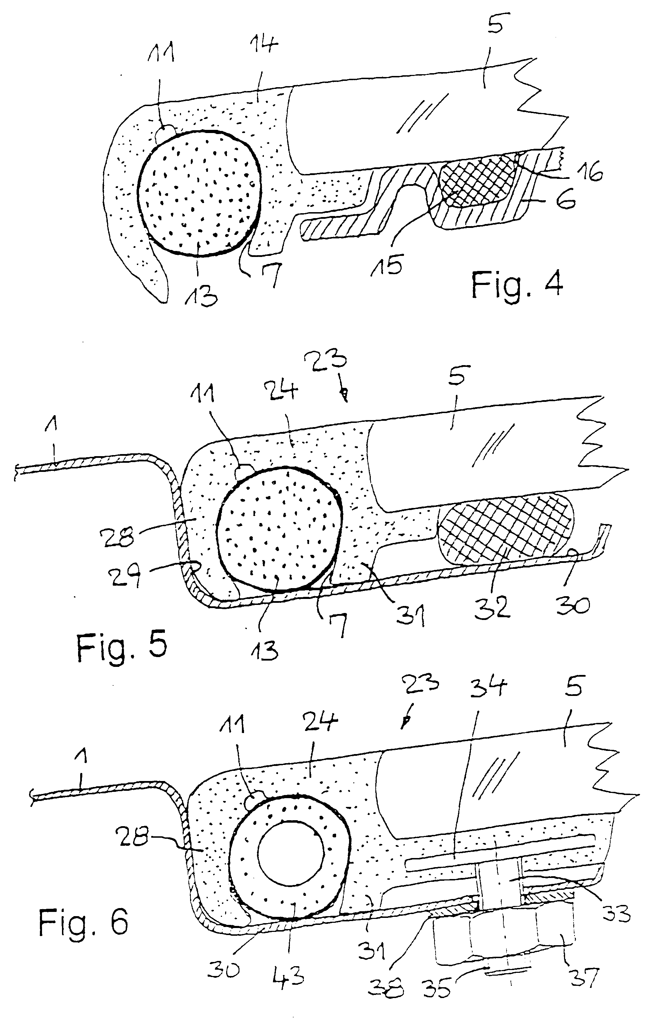

Bei der in Fig. 4 gezeigten Ausführungsform ist an die Deckelplatte 5 als Kantenprofil ein Kunstoffrahmen 14 aus einem thermoplastischen Elastomer, beispielsweise Santopren® der Monsanto Company, St. Louis, MO, USA, angespritzt, ohne den Außenrand des Verstärkungsrahmens 6 mit zu umgreifen. Die Deckelplatte 5 ist mit dem Verstärkungsrahmen 6 über eine Klebstoffspur 15 verklebt. Die Klebstoffspur 15 ist in einen Kanal 16 des Verstärkungsrahmens 6 eingebracht und legt sich gegen die Unterseite der Deckelplatte 5 an.

In den Figuren 5 und 6 sind Ausführungsbeispiele eines Deckels 23 dargestellt, der in das Fahrzeugdach 1 fest eingefügt ist, wobei die insbesondere aus Glas, tranparentem Kunststoff oder anderem Plattenmaterial bestehende Deckelplatte 5 zum Beispiel transparent oder mit Solarzellen belegt sein kann.

Bei der Ausführungsform gemäß Fig. 5 ist der Außenrand der Deckelplatte 5 des Deckels 23 mit Polyurethan oder dergleichen unter Bildung eines Kunststoffrahmens 24 umschäumt, der wiederum die Nut 7 mit der Schwächungsstelle 11 bildet. An die Schwächungsstelle 11 schließt nach außen eine Lippe 28 an, die sich an einen Dachöffnungsrand 29 dichtend anlegt und auf diese Weise das Dach gegen Wasser und Verschmutzung abdichtet. In der Nut 7 befindet sich die oben erläuterte Kunststoffeinlage 13. Die Lippe 28 braucht nicht mit einem Abtropfende (entsprechend dem Abtropfende 12 der Lippe 8 in den Figuren 2 und 3) versehen zu sein. Das Fahrzeugdach 1 ist dabei im Bereich des Dachöffnungsrandes 29 unter Bildung eines Auflageflansches 30 nach unten abgesetzt. An dem Kunststoffrahmen 24 ist ein auf dem Flansch 30 aufsitzender Abstandshalter 31 angeformt. Letzterer sorgt für eine vorbestimmte Ausrichtung, zum Beispiel ein gegenseitiges Fluchten, der Oberseite des Deckels 23 und des den Deckel 23 umgreifenden Teils des Fahrzeugdaches 1. Zum Verbinden von Deckel 23 und Dach 1 ist eine Klebstoffraupe 32 vorgesehen, die gegen die Unterseite der Deckelplatte 5 und die Oberseite des Flanschs 30 anliegt und bei dem gezeigten Ausführungsbeispiel an den Kunststoffrahmen 24 nach innen angrenzt.

Das Ausführungsbeispiel gemäß Fig. 6 unterscheidet sich von dem der Fig. 5 dadurch, daß der Deckel 23 mit dem Fahrzeugdach 1 nicht verklebt, sondern verschraubt ist. Für diesen Zweck sind in den Kunststoffrahmen 24 Schraubbolzen 33 eingebracht, deren Kopf 34 von dem Werkstoff des Kunststoffrahmens 24 umgriffen ist und deren Gewindeschaft 35 durch eine Öffnung 36 des Auflageflansches 30 hindurch gesteckt ist. Auf das freie untere Ende des Gewindeschafts 35 ist eine Mutter 37 aufgeschraubt, die sich gegen eine Unterlegscheibe 38 anpreßt. Außerdem zeigt Fig. 6 eine Ausführungsform, bei der als Kunstoffeinlage 43 ein Kunststoffschlauch, insbesondere Gummischlauch, vorgesehen ist.

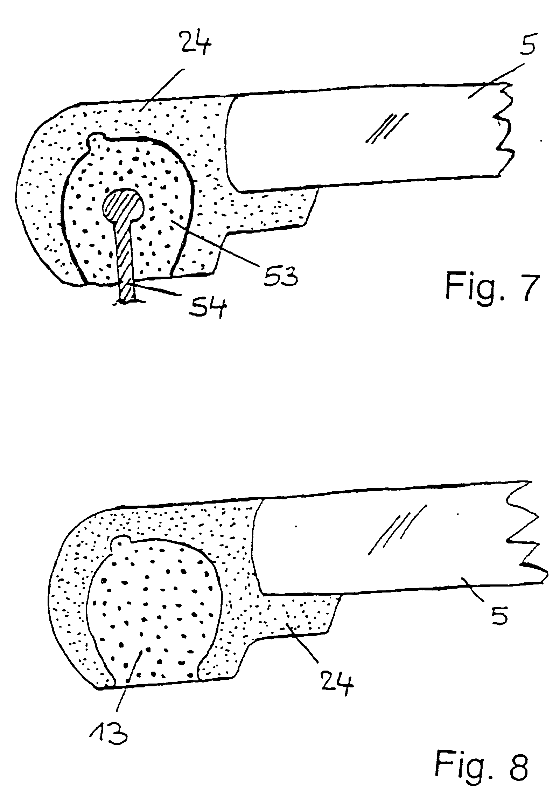

Fig. 7 zeigt eine Ausführungsform mit einer im Querschnitt umgekehrt u-förmigen Kunstoffeinlage 53 aus Schaumstoff, vorzugsweise Moosgummi, die bei einem Anschäumen oder Anspritzen des Kunststoffrahmens 24 an die Deckelplatte 5 mit eingeschäumt bzw. eingespritzt werden kann. Dazu wird die vorgefertigte Kunstoffeinlage 53 auf einen Zapfen 54 aufgesteckt, der in dem der Herstellung des Kunststoffrahmens 24 dienenden, nicht näher veranschaulichten Schäum- oder Spritzwerkzeug befestigt ist. Während des Schäum- oder Spritzvorgangs wird die Kunstoffeinlage 53 von dem Zapfen 54 gehalten und in den Kunststoffrahmen 24 mit eingeschäumt bzw. eingespritzt. Beim Öffnen des Schäum- oder Spritzwerkzeuges fährt der Zapfen 54 aus der Kunstoffeinlage 53 heraus.

Bei der Herstellung des Deckels gemäß Fig. 8 wird in einem ersten Arbeitsschritt der beispielsweise aus Polyurethan zu fertigende Kunststoffrahmen 24 unter Ausbildung der Nut 7 und der Lippe 28 an die Deckelplatte 5 angeschäumt oder angespritzt. In einem zweiten Arbeitsschritt wird Schaumstoff, vorzugsweise Moosgummimaterial, in die Nut 7 des Kunststoffrahmens 24 eingebracht und in dieser Höhlung aufgeschäumt und fertig ausreagiert. Diese Einbringen kann in dem zur Herstellung des Kunststoffrahmens 24 verwendeten Schäum- oder Spritzwerkzeug in einem zweiten Arbeitsschritt erfolgen oder auch zeitlich versetzt außerhalb des Werkzeuges in einer anderen Vorrichtung.

### Bezugszeichenliste

- 1: Fahrzeugdach
- 2: Dachöffnung
- 3: Deckel
- 4: Kunststoffrahmen
- 5: Deckelplatte
- 6: Verstärkungsrahmen
- 7: Nut
- 8: Lippe
- 9: Dachöffnungsrand
- 10: Übergangsteil
- 11: Schwachungsstelle
- 12: Abtropfende
- 13: Kunststoffeinlage
- 14: Kunststoffrahmen
- 15: Klebstoffspur
- 16: Kanal
- 23: Deckel
- 24: Kunststoffrahmen
- 28: Lippe
- 29: Dachöffnungsrand
- 30: Auflageflansch
- 31: Abstandshalter
- 32: Klebstoffraupe
- 33: Schraubbolzen
- 34: Kopf
- 35: Gewindeschaft
- 36: Öffnung
- 37: Mutter
- 38: Unterlegscheibe
- 43: Kunststoffeinlage
- 53: Kunststoffeinlage
- 54: Zapfen

## Patentansprüche

1. Deckel (3, 23) eines Fahrzeugdaches (1) mit einer Deckelplatte (5), einem am Rand der Deckelplatte (5) umlaufenden, angespritzten bzw. angeschäumten Kunststoffrahmen (4, 14, 24) und einer Randspaltdichtung am Außenrand des Kunststoffrahmens (4), **dadurch gekennzeichnet, daß** der Kunststoffrahmen (4, 14, 24) am Außenrand eine nach unten offene Nut (7) aufweist, die nach außen durch eine die Randspaltdichtung bildende Lippe (8, 28) begrenzt ist.

2. Deckel nach Anspruch 1, dadurch gekennzeichnet, daß die Lippe (8, 28) eine erhabene konvexe Außenkontur aufweist.

3. Deckel nach Anspruch 1 oder 2, dadurch gekennzeichnet, daß in der Nut (7) eine Kunststoffeinlage (13, 43, 53) aus einem Material angeordnet ist, das weicher ist als das Material des Kunststoffrahmens (4, 14, 24).

4. Deckel nach Anspruch 3, dadurch gekennzeichnet, daß die Nut (7) eine zur Kontur der Kunststoffeinlage (13, 43, 53) komplementäre, insbesondere eine im Querschnitt annähernd kreisförmige, Kontur aufweist.

5. Deckel nach Anspruch 3 oder 4, dadurch gekennzeichnet, daß die Kunstoffeinlage (13) den Querschnitt der Nut (7) mindestens näherungsweise vollständig ausfüllt.

6. Deckel nach Anspruch 3 oder 4, dadurch gekennzeichnet, daß die Kunstoffeinlage (43, 53) den Querschnitt der Nut (7) nur teilweise füllt und vorzugsweise im Querschnitt ringförmig oder umgekehrt U-förmig ausgebildet ist.

7. Deckel nach einem der Ansprüche 3 bis 6, dadurch gekennzeichnet, daß die Kunststoffeinlage (13, 43, 53) einen Schaumstoff, insbesondere Moosgummi, umfaßt.

8. Deckel nach einem der vorhergehenden Ansprüche, dadurch gekennzeichnet, daß der Grund der Nut (7) über eine ein Gelenk bildende Schwächungsstelle (11) in die Lippe (8, 28) übergeht.

9. Deckel nach einem der vorhergehenden Ansprüche, dadurch gekennzeichnet, daß der Deckel (3) als beweglicher Deckel eines öffnungsfähigen Fahrzeugdaches (1) ausgebildet ist.

10. Deckel nach Anspruch 9, dadurch gekennzeichnet, daß die Lippe (8) in einem verjüngten Abtropfende (12) ausläuft.

11. Deckel nach Anspruch 9 oder 10, dadurch gekennzeichnet, daß die Deckelplatte (5) auf einem Verstärkungsrahmen (6) abgestützt ist.

12. Deckel nach Anspruch 11, dadurch gekennzeichnet, daß der Kunststoffrahmen (4) den Randbereich des Verstärkungsrahmens (6) umschließt.

13. Deckel nach Anspruch 11, dadurch gekennzeichnet, daß der Verstärkungsrahmen (6) mit der Deckelplatte (5) verklebt ist.

14. Deckel nach einem der Ansprüche 1 bis 8, dadurch gekennzeichnet, daß der Deckel (23) als in das Fahrzeugdach (1) unbeweglich eingesetztes Dachelement ausgebildet ist.

15. Deckel nach Anspruch 14, dadurch gekennzeichnet, daß der Kunststoffrahmen (24) zugleich als Abstandshalter ausgebildet ist, der für eine vorbestimmte Ausrichtung der Oberseite des Deckels (23) zu dem den Deckel umgreifenden Teil des Fahrzeugdaches (1) sorgt.

16. Deckel nach einem der Ansprüche 14 und 15, dadurch gekennzeichnet, daß der Deckel (23) mit dem Fahrzeugdach (1) verklebt oder verschraubt ist.

17. Verfahren zur Herstellung des Deckels nach einem der vorhergehenden Ansprüche, dadurch gekennzeichnet, daß der Kunststoffrahmen (4, 14, 24) am Rand der Deckelplatte (5), gegebenenfalls unter Einschluß des Randbereichs des Verstärkungsrahmens (6), angespritzt oder angeschäumt wird, und daß dabei die nach unten offene Nut (7) und die die Randspaltdichtung bildende Lippe (8, 28) ausgebildet werden.

18. Verfahren nach Anspruch 17, dadurch gekennzeichnet, daß im Zuge des Anspritzens oder Anschäumens des Kunststoffrahmens (4, 14, 24) oder in einem nachfolgenden Arbeitsschritt die Kunststoffeinlage (13, 43, 53) in die Nut (7) des Kunststoffrahmens (4, 14, 24) eingebracht wird.

19. Verfahren nach Anspruch 18, dadurch gekennzeichnet, daß eine vorgefertigte Kunststoffeinlage (53) an einer Halterung (54) in einem zur Ausbildung des Kunststoffrahmens (4, 14, 24) benutzten Spritz- oder Schäumwerkzeug fixiert wird, dann der Kunststoffrahmen ausgebildet wird und beim Öffnen des Spritz- oder Schäumwerkzeugs die Kunststoffeinlage (13) von der Halterung gelöst wird.

20. Verfahren nach Anspruch 18, dadurch gekennzeichnet, daß nach dem Anspritzen oder Anschäumen des Kunststoffrahmens (4, 14, 24) zur Bildung der Kunststoffeinlage (13) bestimmter Schaumstoff in die Nut (7) des Kunststoffrahmens (4, 14, 24) eingebracht und dort aufgeschäumt wird.
